# FASCICULE DE BREVET EUROPEEN

(11) **EP 3 457 169 B1**
(45) Date de publication et mention de la délivrance du brevet: **11.03.2026**
(21) Numéro de dépôt: 18193636.0
(22) Date de dépôt: 11.09.2018
(51) Int. Cl.: G01S 7/481, G02B 6/02, H01S 3/094

(54) **DISPOSITIF DE TÉLÉMÉTRIE LASER MONOSTATIQUE**
MONOSTATISCHE LASERTELEMETRIEVORRICHTUNG
MONOSTATIC LASER TELEMETRY DEVICE

(30) Priorité: 13.09.2017 FR 1758501
(43) Date de publication de la demande: 20.03.2019
(73) Titulaire: KEOPSYS INDUTRIES, 22300 Lannion (FR)
(72) Inventeur: CHIQUET, Frédéric, 35000 RENNES (FR); PALLIER, Gwenn, 35135 CHANTEPIE (FR); CANAT, Guillaume, 22700 PERROS GUIREC (FR); LE FLOHIC, Marc, 22560 PLEUMEUR BODOU (FR)
(74) Mandataire: Ermeneux, Bertrand

(56) Documents cités:
- FR-A1- 2 954 526
- FR-A1- 3 031 597
- US-A1- 2012 154 783
- US-A1- 2014 168 631

## Description

### 1. Domaine de l'invention

Le domaine de l'invention est celui de la télémétrie.

Plus précisément, l'invention concerne un dispositif de télémétrie laser monostatique.

L'invention trouve notamment une application dans la mise en œuvre de capteurs 3D LIDAR (acronyme de " light detection and ranging" en anglais) d'une portée de quelques centaines de mètres à environ 10 kilomètres.

### 2. Etat de la technique

Il est connu de mettre en œuvre des télémètres laser monovoie, encore appelés communément télémètres laser monostatiques, pour détecter des objets distants de plusieurs kilomètres.

Un avantage de ces télémètres laser monostatiques est qu'ils sont plus aisés à régler lors de la fabrication. En effet il suffit de régler un seul système optique du fait que l'émission et la réception du faisceau se font au travers de la même optique. Par ailleurs, comme ils ne comportent qu'une seule optique ils sont plus légers que des télémètres laser bivoie, dits bistatiques.

Afin de simplifier la mise en œuvre des télémètres laser monostatiques, le document US 2012/154783 A1 et le document US-B2-8,730,456 proposent d'utiliser un duplexeur couplé à une source de lumière laser et un photodétecteur. Dans ces documents, le duplexeur peut être obtenu en réalisant un coupleur à partir d'une fibre double gaine et d'une fibre optique multimode, par fusion d'une portion de la fibre double gaine avec une portion de la fibre optique multimode.

Un inconvénient de cette technique de télémètre laser monostatique résulte cependant des fuites de la voie d'émission vers la voie de réception, générée notamment par la réflexion de Fresnel, de l'ordre de 4%, sur la face de sortie de la fibre optique double gaine du duplexeur. Ces fuites entraînent en effet un éblouissement du photodétecteur, qui se sature, ce qui empêche la détection des impulsions par le photodétecteur pendant quelques dizaines à centaines de nanosecondes, voire peut entraîner la destruction du photodétecteur et/ou du circuit amplicateur transimpédance connecté au photodétecteur. C'est pourquoi, afin d'éviter les risques d'éblouissement du photodétecteur, on limite la puissance de la source de lumière de ce type de télémètre, ce qui par conséquent limite le rapport signal à bruit maximum et le taux d'extinction du télémètre, ou autrement dit sa portée.

Afin de permettre au télémètre de capter une quantité importante de lumière, tout en limitant les risques d'éblouissement du photodétecteur, le document US 2012/154783 A1, ou le document US-B2-8,730,456, propose de cliver l'extrémité libre de la fibre optique double gaine selon un angle par rapport à une direction perpendiculaire à son axe sensiblement égal à zéro, et d'appliquer un traitement antireflet à l'extrémité libre de la fibre optique double gaine.

FR 3 031 597 A1 concerne un collimateur à fibre optique intégrée et son procédé de fabrication. Ce collimateur trouve une application dans la production de composants fibrés, de lasers et d'amplificateurs à fibre. La fibre est une fibre à simple gaine dont la gaine a été retirée à son extrémité pour l'encastrer dans la lentille. Ainsi quand bien même l'extrémité de la fibre serait clivée, le problème du retour des rayons réfléchis dans la gaine ne se pose pas.

Obtenir une fibre optique double gaine dont l'extrémité est parfaitement perpendiculaire à son axe est cependant en pratique très difficile à mettre en œuvre, et l'angle de clive obtenu est le plus souvent compris entre 0,1 et 2°. Or un angle de clive proche de 0° entraîne un retour parasite d'une partie substantielle de la lumière émise dans le cœur de la fibre double gaine, qui risque d'endommager la source laser. Par ailleurs, si l'angle de clive est faible mais supérieur à environ 1°, une fraction significative du faisceau optique réfléchi sur l'extrémité libre clivée de la fibre optique double gaine n'est pas couplée dans le cœur mais dans la gaine interne. Après traversée du duplexeur, il se couple dans la voie de détection et risque d'endommager le détecteur.

### 3. Objectifs de l'invention

L'invention a donc notamment pour objectif de pallier les inconvénients de l'état de la technique cités ci-dessus.

Plus précisément l'invention a pour objectif de fournir une technique de télémétrie laser qui présente un taux d'extinction important pouvant atteindre 31 dB, et un rapport signal à bruit supérieur ou égal à 60dB.

Un objectif de l'invention est également de fournir une telle technique de télémétrie laser qui permette de mettre en œuvre des sources de lumière d'une puissance convenable, suffisante pour détecter des objets distants d'environ 4 kilomètres de la source de lumière.

Un autre objectif de l'invention est de fournir une technique de télémétrie laser qui présente un taux d'extinction supérieur à 15dB, voire supérieur à 30dB.

L'invention a également pour objectif de fournir une telle technique qui soit simple à mettre en œuvre, et d'un coût de revient réduit.

Encore un objectif de l'invention est de fournir une telle technique qui soit fiable.

### 4. Exposé de l'invention

Ces objectifs, ainsi que d'autres qui apparaitront par la suite sont atteints à l'aide d'un dispositif de télémétrie laser monostatique comprenant :
- une source de lumière laser ;
- un photodétecteur ;
- une fibre optique double gaine couplée à un dispositif optique de collimation d'un faisceau sortant et de focalisation d'un faisceau entrant dans ledit dispositif de télémétrie laser, ladite fibre optique double gaine étant formé d'un cœur d'indice de réfraction moyen n₁, d'une gaine interne d'indice de réfraction n₂, d'une gaine externe d'indice de réfraction n₃, avec n₁<n₂<n₃ ;
- un duplexeur à fibre optique apte à séparer la lumière émise par ladite source de lumière, destinée à être transmise au cœur de ladite fibre optique double gaine, de la lumière se propageant dans la gaine interne de ladite fibre optique double gaine, destinée à être transmise audit photodétecteur, comprenant :
   - une première fibre optique formant un port d'entrée dudit duplexeur,
   - une deuxième fibre optique formant un premier port de sortie dudit duplexeur, ladite deuxième fibre optique étant multimode,
   ladite première fibre optique couplée à ladite source laser et ladite deuxième fibre optique étant couplée audit photodétecteur et ladite fibre optique double gaine formant un deuxième port de sortie dudit duplexeur ;
- des moyens de traitement du courant généré par ladite photodétecteur à partir de la lumière reçue par ladite photodétecteur configurés de sorte à fournir une distance à partir dudit courant généré.

Selon l'invention, l'ouverture numérique du guide de lumière formé de la gaine interne et de la gaine externe de la fibre double gaine est inférieure ou égal à 0,5, de préférence est inférieure ou égal à 0,3, et supérieure à 0,1 et l'extrémité de ladite fibre double gaine tournée vers ledit dispositif optique de collimation et de focalisation présente une face inclinée par rapport à un axe perpendiculaire à l'axe de la fibre d'un angle supérieur ou égal à la moitié de l'arcsinus de ladite ouverture numérique.

Ainsi, de façon inédite, l'invention propose, au contraire du document US-B2-8,730,456, de biseauter l'extrémité de la fibre double gaine tournée vers le dispositif de collimation et de focalisation suivant un angle d'une valeur significative par rapport à la perpendiculaire à l'axe de la fibre optique double gaine, suffisante pour que seule une partie réduite des faisceaux réfléchis par le dispositif de collimation et de focalisation reviennent dans la gaine interne de la fibre optique double gaine, tout en conservant une puissance convenable.

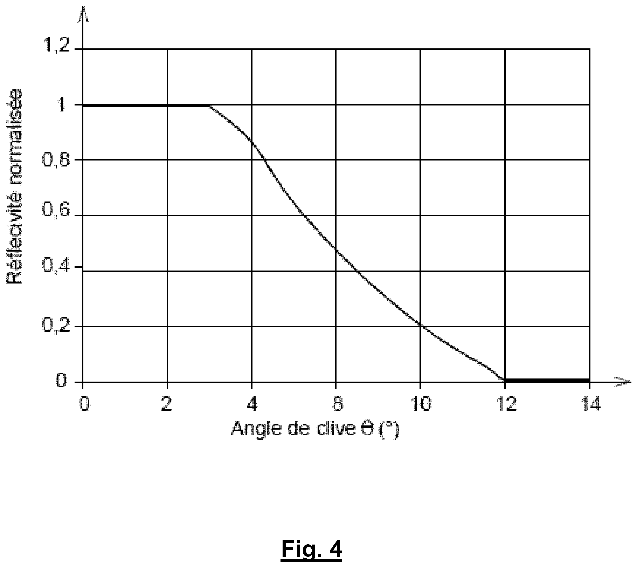

Il convient de noter, ainsi que le montre la figure 4 dans le cas d'une fibre optique double gaine d'ouverture de gaine interne 0,22, que la puissance couplée par réflexion de la lumière issue du cœur d'une fibre optique double gaine vers la gaine interne de la double gaine décroit rapidement avec l'angle de clive θ. Elle est déjà réduite de 50% à partir d'environ la moitié de l'arcsinus de l'ouverture numérique de la gaine interne.

Dans des modes de réalisation particuliers de l'invention, l'ouverture numérique du guide de lumière formé de la gaine interne et de la gaine externe de la fibre double-gaine peut être comprise entre 0,1 et 0,35, entre 0,1 et 0,37, entre 0,1 et 0,4, entre 0,1 et 0,42 ou encore entre 0,1 et 0,45.

Dans un mode de réalisation particulier de l'invention, ledit angle est supérieur ou égal à 8°.

La mise en œuvre d'un tel angle est en pratique aisée.

Selon un mode de réalisation avantageux de l'invention, ladite ouverture numérique est inférieure à 0,22 et en ce que ledit angle est supérieur ou égal à 6,5°.

Selon un aspect particulier de l'invention, ladite extrémité de ladite fibre optique double gaine est clivée ou polie, ou est formée d'un connecteur monté sur ladite fibre optique double gaine.

Avantageusement, ledit photodétecteur comprend une photodiode et, comme option additionnelle, le circuit amplificateur transimpédance à amplificateur opérationnel destiné à amplifier le courant généré par ladite photodiode comprend des moyens de limitation du courant généré.

Pour des performances optimales, les moyens de traitement peuvent avantageusement sommer, ou moyenner, les photocourants d'un nombre N élevé d'impulsions, typiquement une centaine. Une fois cette accumulation réalisée des algorithmes de détections tels qu'un algorithme de détection de maximum après seuillage ou un test de vraisemblance généralisée peuvent être utilisés afin de trier les échos et les fausses alarmes.

De façon avantageuse, lesdits moyens de traitement comprennent des moyens de soustraction au courant généré par ladite photodiode d'une valeur de courant prédéfinie appartenant au groupe comprenant au moins :
- valeur de courant constante ;
- valeur de courant proportionnelle au courant généré par des réflexions parasites.

Dans un mode de réalisation préférentiel de l'invention, ledit dispositif optique de collimation comprend une lentille mince, une lentille asphérique ou un élément optique diffractif, tel qu'une lentille de Fresnel.

On notera qu"une lentille de Fresnel est particulièrement avantageuse car elle présente un encombrement limité.

On obtient ainsi un dispositif de télémétrie simple à mettre en œuvre et peu coûteux.

Avantageusement, ladite source de lumière laser comprend au moins une diode laser apte à émettre des impulsions de lumière dans la bande de longueur d'ondes 1530 à 1600 nm.

On peut ainsi amplifier le faisceau de lumière émis par la diode à l'aide d'amplificateur à fibre dopée Erbium ou à fibre dopée Ytterbium Erbium.

Selon une autre implémentation, ladite source de lumière laser comprend au moins une diode laser apte à émettre des impulsions de lumière dans la bande de longueur d'ondes 970 à 1100 nm.

On peut ainsi amplifier le faisceau de lumière émis par la diode à l'aide d'amplificateur à fibre dopée Ytterbium.

Selon un aspect avantageux de l'invention, ledit photodétecteur comprend une photodiode fibrée avec une fibre multimode, fonctionnant en mode photoconductif ou en mode avalanche.

On obtient ainsi un dispositif de télémétrie simple à mettre en œuvre et peu coûteux.

De préférence, ladite extrémité de ladite fibre optique double gaine est traitée antireflet pour la ou les longueurs d'ondes d'émission de ladite source de lumière laser.

De préférence le traitement antireflet mis en œuvre permet de réduire la puissance rétrodiffusée d'un facteur 4 à 20.

Selon un mode de réalisation particulièrement avantageux de l'invention, ledit duplexeur comprend un coupleur obtenu par fusion étirage de ladite fibre optique double gaine avec ladite deuxième fibre optique.

Dans un mode de réalisation particulier de l'invention, ladite source de lumière laser est agencée de sorte à émettre des trains d'un nombre N d'impulsions par salve et ledit dispositif de télémétrie laser monostatique comprend des moyens de contrôle de ladite source de lumière laser configurés de sorte à réduire automatiquement le nombre N d'impulsions dans le cas où le rapport signal à bruit calculé par lesdits moyens de traitement est supérieur à un premier seuil prédéterminé permettant d'augmenter la fréquence de mesure, et de sorte à augmenter automatiquement le nombre N d'impulsions dans la limite des spécifications requises pour garantir des conditions de sécurité oculaire, dans le cas où ledit rapport signal à bruit est inférieur ou égal à un deuxième seuil prédéterminé.

En d'autres termes, le nombre N d'impulsions par salve est ajusté automatiquement par les moyens de contrôle pour garantir la fréquence de mesure maximale possible pour un niveau de rapport signal à bruit constant et une puissance moyenne limitée par les conditions de sécurité oculaire constante.

### 5. Liste des figures

D'autres caractéristiques et avantages de l'invention apparaitront plus clairement à la lecture de la description suivante d'un mode de réalisation de l'invention, donné à titre de simple exemple illustratif et non limitatif, et des dessins annexés parmi lesquels :
- la figure 1 représente de façon schématique l'architecture d'un exemple de mode de réalisation d'un dispositif de télémétrie laser monostatique selon l'invention ;
- la figure 2 est une vue de détail de la zone d'extrémité libre de la fibre optique double gaine du dispositif de télémétrie laser monostatique présenté en référence à la figure 1 ;
- la figure 3 détaille la constitution du photodétecteur du dispositif de télémétrie laser monostatique présenté en référence à la figure 1 ;
- la figure 4 illustre la variation de la puissance couplée par réflexion de la lumière issue du cœur d'une fibre optique double gaine d'ouverture de gaine interne 0.22 vers la double gaine de cette même fibre optique en fonction de l'angle de clive de l'extrémité de cette fibre optique double gaine.

### 6. Description détaillée de l'invention

### 6.1 Exemple de mode de réalisation de l'invention

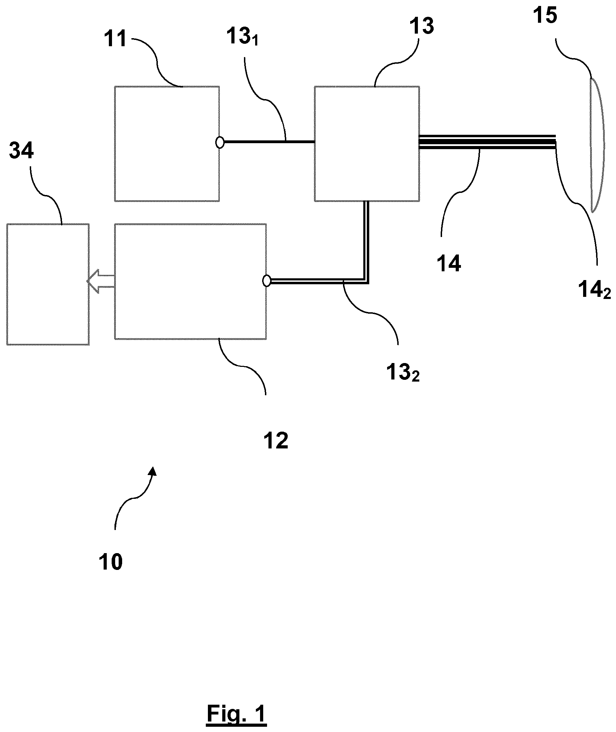

On a illustré sous forme schématique sur la figure 1 un exemple de mode de réalisation d'un dispositif télémétrique laser 10 selon l'invention.

Le dispositif 10 comprend une diode laser fibrée 11 et un photodétecteur 12 couplée respectivement à une entrée et à une sortie d'un duplexeur 13, l'autre sortie du duplexeur 13 étant formée d'une portion d'une fibre double gaine 14 couplée à une lentille mince 15 destinée à collimater le faisceau lumineux sortant du cœur de la fibre optique double gaine 14 et de focaliser le faisceau lumineux captée par la lentille 15 sur l'extrémité libre 14₁ de la fibre optique double gaine 14.

Dans ce mode de réalisation particulier de l'invention, la diode laser 11 est destinée à émettre des impulsions d'une durée de 10ns, d'une longueur d'onde de 1550nm et d'une puissance crête de 20mW, amplifiées par deux amplificateurs à fibre optique dopée respectivement à l'Erbium (non représentés sur la figure 1), de diamètre de mode égal à 11µm, de sorte à atteindre une puissance de crête de 8kW en sortie de la source de lumière.

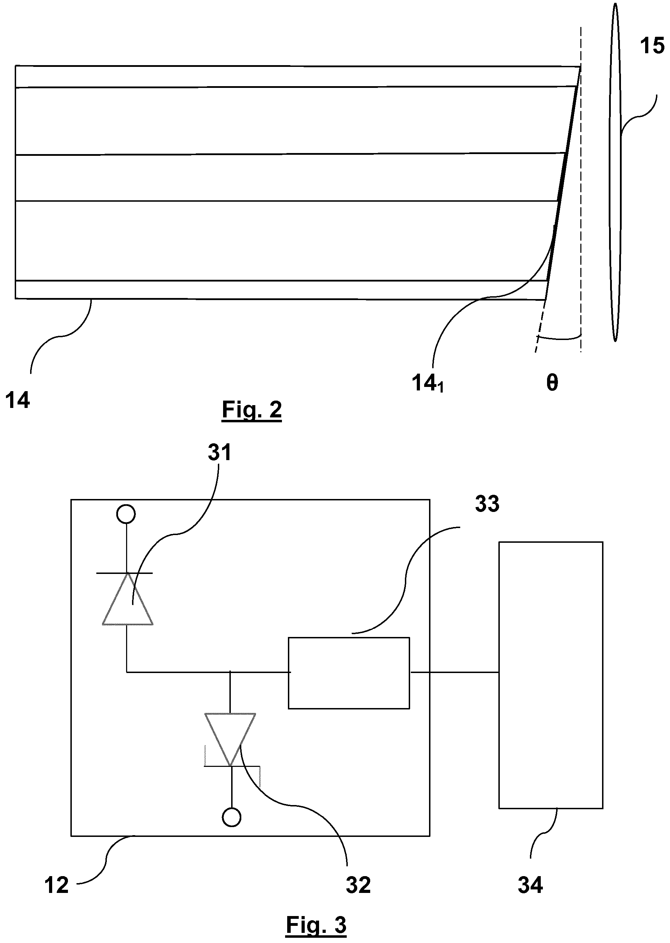

Le photodétecteur 12 est, dans ce mode de réalisation particulier de l'invention, avantageusement construit autour d'une photodiode fonctionnant en mode avalanche, d'une bande passante d'environ 100 MHz et d'un gain interne de 10. Comme on peut le voir sur la figure 3, cette photodiode 31 est connectée à un circuit préamplificateur transimpédance à amplificateur opérationnel 33 monté au plus proche de celle-ci afin de maximiser le rapport signal sur bruit. Une diode Zener 32 connectée à la masse, permettant de limiter le courant dans le circuit préamplificateur transimpédance, est par ailleurs montée en dérivation entre la photodiode 31 et le circuit préamplificateur transimpédance 33, ce qui permet de limiter le temps pendant lequel le photodétecteur est ébloui à moins de 200ns. Un système de traitement analogique-numérique 34 destiné à convertir le courant émis par la photodiode en une valeur représentative de la distance séparant le dispositif de télémétrie de sa cible, est en outre relié à la sortie du circuit préamplificateur transimpédance. On notera qu'un grand nombre d'acquisitions d'impulsions consécutives (par exemple jusqu'à 190) sont moyennées afin d'augmenter le rapport signal à bruit en sortie de la chaîne de mesure.

L'entrée du duplexeur 13 est formée d'une première fibre optique 13₁, soudée à la fibre du deuxième amplificateur de la source de lumière, de façon à limiter les pertes. La sortie 13₂ du duplexeur, couplée au photodétecteur 12 est formée d'une deuxième fibre optique, de type multimode soudée à une fibre optique multimode couplée à la photodiode du photodétecteur 12. On notera que pour limiter le couplage entre la source de lumière et le photodétecteur une attention particulière doit être apportée lors de la soudure à l'alignement entre la première fibre optique et la fibre du deuxième amplificateur de la source de lumière et à l'apparition d'un désaccord modal.

Le duplexeur 13 permet de séparer la lumière émise par la source de lumière et transmise de façon substantielle au cœur de la fibre optique double gaine 14, de la lumière se propageant, dans le sens contraire, dans la gaine interne de la fibre optique double gaine 14 destinée à être transmise au photodétecteur 12.

Ce duplexeur 13 a été obtenu, de façon connue en soi, par fusion-étirage de la fibre optique double gaine 14 et de la deuxième fibre optique multimode 13₂, de sorte à former un coupleur. Le principe de fabrication d'un tel coupleur est par exemple décrit dans le document Madore, W. J., De Montigny, E., Ouellette, O., Lemire-Renaud, S., Leduc, M., Daxhelet, X., ... & Boudoux, C. (2013). Asymmetric double-clad fiber couplers for endoscopy. Optics letters, 38(21), 4514-4517. Dans d'autres modes de réalisation de l'invention, il peut être envisagé de mettre en œuvre des miroirs ou des éléments réfractifs ou diffractifs pour former le duplexeur.

Il convient de noter que le duplexeur 13 est avantageusement conçu de sorte à présenter :
- de faibles pertes, et de préférence moins de 0,01% de perte de puissance, lors de la transmission de la lumière se propageant dans le cœur de la première fibre optique vers le cœur de la fibre optique double gaine et par conséquent une isolation importante entre la gaine de la fibre optique double gaine et la première fibre optique ;
- moins de 50% de perte de puissance au niveau du couplage entre la gaine interne de la fibre optique double gaine 14 et la deuxième fibre optique multimode 13₂.

Le duplexeur peut être également obtenu en construisant un circulateur tel que le port d'entrée soit relié à la source laser, le port commun soit réalisé en fibre double gaine et placé devant le système optique de collimation et le port de sortie soit relié au photodétecteur.

Par ailleurs, afin de limiter le couplage entre la source de lumière et le photodétecteur, l'extrémité de la deuxième fibre optique qui n'est pas couplée au photorécepteur a été polie pour minimiser la quantité de lumière pénétrant dans le dispositif de télémétrie par cette extrémité. Dans des variantes de ce mode de réalisation de l'invention, il peut être envisagé de cliver ou d'appliquer un traitement antireflet à l'extrémité non utilisée de la deuxième fibre optique ou d'apporter tout autre modification connue permettant de limiter le retour de lumière dans le dispositif télémétrique via l'extrémité non utilisée de la deuxième fibre optique.

Avantageusement, le diamètre de mode du coeur de la fibre optique double gaine 14, a été ramené à un diamètre différent de moins d'un micromètre de celui de la fibre de sortie de la source laser. La gaine interne de la fibre double gaine présente un diamètre égal à 105µm et la gaine externe un diamètre égal à 200µm et l'ouverture numérique du guide formé par la gaine interne et la gaine externe de cette fibre double gaine 14 est égal à 0,2.

Dans des variantes de ce mode de réalisation particulier de l'invention, il peut être envisagé de mettre en œuvre une fibre optique double gaine de diamètre de gaine interne compris entre 80µm et 1000 µm et d'ouverture numérique comprise entre 0,1 et 0,3 sans sortir du cadre de l'invention.

Par ailleurs, dans ce mode de réalisation particulier de l'invention, le diamètre de mode du cœur de la deuxième fibre optique est égal à 105 µm, et son ouverture numérique est de 0,22.

Comme on peut le voir sur la figure 2, qui est une vue de détail de la zone d'extrémité de la fibre optique double gaine 14, l'extrémité 14₁ tournée vers la lentille 15 est située au niveau de la position du foyer principal de la lentille 15. Elle est par ailleurs biseautée selon un angle de clive θ par rapport à une direction perpendiculaire à son axe sensiblement égal à 8°, dans ce mode de réalisation particulier de l'invention. L'extrémité 14₁ de la fibre optique est en outre avantageusement traitée antireflet à 1550nm de façon à réduire d'un facteur 12 la puissance rétrodiffusée.

Dans ce mode de réalisation particulier de l'invention, on a avantageusement sélectionné le diamètre D et la focale f de la lentille 15 de sorte que le rapport D/f soit sensiblement égal à deux fois l'ouverture numérique du guide formé par la gaine interne et la gaine externe de la fibre optique double gaine 14. Il est ainsi de 0,375 dans ce mode de réalisation particulier de l'invention.

Des mesures ont montré qu'un tel dispositif de télémétrie laser présente un taux d'extinction supérieur à 32 dB et permet de télémétrer des cibles à plus de 4 km.

### 6.2Autres caractéristiques optionnelles et avantages de l'invention

Dans des variantes du mode de réalisation de l'invention détaillé ci-dessus, il peut également être prévu :
- que la source de lumière du dispositif télémétrique soit un laser fibré ;
- que la puissance crête du signal émis par la diode laser ou le laser fibré soit comprise entre 500W et 40kW;
- que le dispositif optique de collimation et de focalisation comprenne une lentille asphérique.

Dans encore une variante, il peut être envisagé de mettre entre œuvre un amplificateur à fibre optique, tel que par exemple un amplificateur à fibre optique dopée ou à semiconducteur ou un atténuateur variable, entre ladite deuxième fibre optique et ledit photodétecteur, sans sortir du cadre de l'invention.

Dans une autre variante du mode de réalisation de l'invention décrit ci-dessus, il peut être prévu que la source de lumière laser émette des trains de N d'impulsions d'une durée T1 espacés d'une durée T2. Dans cette variante, le système de traitement analogique-numérique fournit à un module de contrôle de la source laser une valeur du rapport signal à bruit calculée à partir de l'énergie de l'impulsion détectée et de la variance du bruit et le module de contrôle réduit automatiquement le nombre N d'impulsion dans le cas où le rapport signal à bruit est suffisant pour augmenter la fréquence de mesure. Si le rapport signal à bruit est inférieur à un seuil prédéfini, le module de contrôle de la source laser augmente le nombre N d'impulsions automatiquement en restant dans des conditions prédéterminées telle que des limites de consommations électriques ou de puissance moyenne du dispositif de télémétrie, correspondent à des limites de sécurité oculaire, définies par exemple dans la norme EN60825-1.

## Revendications

1. Dispositif de télémétrie laser (10) monostatique comprenant :
- une source de lumière laser (11);
- un photodétecteur (12);
- une fibre optique double gaine (14) couplée à un dispositif optique de collimation (15) d'un faisceau sortant et de focalisation d'un faisceau entrant dans ledit dispositif de télémétrie laser (10), ladite fibre optique double gaine (14) étant formé d'un cœur d'indice de réfraction moyen n₁, d'une gaine interne d'indice de réfraction n₂, d'une gaine externe d'indice de réfraction n₃, avec n₁<n₂<n₃ ;
- un duplexeur à fibre optique (13) apte à séparer la lumière émise par ladite source de lumière laser (11), destinée à être transmise au cœur de ladite fibre optique double gaine (14), de la lumière se propageant dans la gaine interne de ladite fibre optique double gaine (14), destinée à être transmise audit photodétecteur (12), comprenant :
- une première fibre optique (13₁) formant un port d'entrée dudit duplexeur (13),
- une deuxième fibre optique (13₂) formant un premier port de sortie dudit duplexeur (13), adite deuxième fibre optique (13₂) étant multimode, ladite première fibre optique (13₁) couplée à ladite source laser (11) et ladite deuxième fibre optique (13₂) étant couplée audit photodétecteur (12) et ladite fibre optique double gaine (14) formant un deuxième port de sortie dudit duplexeur (13) ;
- des moyens de traitement (34) du courant généré par ladite photodétecteur (12) à partir de la lumière reçue par ladite photodétecteur (12) configurés de sorte à fournir une distance à partir dudit courant généré ;
**caractérisé en ce que** l'ouverture numérique du guide de lumière formé de la gaine interne et de la gaine externe de la fibre double gaine (14) est inférieure ou égal à 0,5, de préférence est inférieure ou égal à 0,3, et supérieure à 0,1 et **en ce que** l'extrémité (14₁) de ladite fibre double gaine (14) tournée vers ledit dispositif optique de collimation (15) et de focalisation présente une face inclinée par rapport à un axe perpendiculaire à l'axe de la fibre d'un angle supérieur ou égal à la moitié de l'arcsinus de ladite ouverture numérique.

2. Dispositif de télémétrie laser monostatique (10 selon la revendication 1, **caractérisé en ce que** ledit angle est supérieur ou égal à 8°.

3. Dispositif de télémétrie laser monostatique (10) selon la revendication 1, **caractérisé en ce que** ladite ouverture numérique est inférieure à 0,22 et **en ce que** ledit angle est supérieur ou égal à 6,5°.

4. Dispositif de télémétrie laser monostatique (10) selon l'une quelconque des revendications 1 à 3, **caractérisé en ce que** ladite extrémité de ladite fibre optique double gaine (14) est clivée ou polie ou est formée d'un connecteur monté sur ladite fibre optique double gaine (14).

5. Dispositif de télémétrie laser monostatique (10) selon l'une quelconque des revendications 1 à 4, **caractérisé en ce que** ledit photodétecteur (12) comprend une photodiode (31) et, comme option additionnelle, le circuit amplificateur transimpédance à amplificateur opérationnel (33) destiné à amplifier le courant généré par ladite photodiode (31) comprend des moyens de limitation (32) du courant généré.

6. Dispositif de télémétrie laser monostatique (10) selon l'une quelconque des revendications 1 à 5, **caractérisé en ce que** lesdits moyens de traitement (34) comprennent des moyens de soustraction au courant généré par ladite photodiode d'une valeur de courant prédéfinie appartenant au groupe comprenant au moins :
- valeur de courant constante ;
- valeur de courant proportionnelle au courant généré par des réflexions parasites.

7. Dispositif de télémétrie laser monostatique (10) selon l'une quelconque des revendications 1 à 6, **caractérisé en ce que** ledit dispositif optique de collimation (15) comprend une lentille mince, une lentille asphérique ou un élément optique diffractif telle qu'une lentille de Fresnel.

8. Dispositif de télémétrie laser monostatique (10) selon l'une quelconque des revendications 1 à 7, **caractérisé en ce que** ladite source de lumière laser (11) comprend au moins une diode laser apte à émettre des impulsions de lumière dans la bande de longueur d'ondes 1530 à 1600 nm.

9. Dispositif de télémétrie laser monostatique (10) selon l'une quelconque des revendications 1 à 8, **caractérisé en ce que** ledit photodétecteur (12) comprend une photodiode fibrée avec une fibre multimode, fonctionnant en mode photoconductif ou en mode avalanche.

10. Dispositif de télémétrie laser monostatique (10) selon l'une quelconque des revendications 1 à 9, **caractérisé en ce que** ladite extrémité (14₁) de ladite fibre optique double gaine (14) est traitée antireflet pour la ou les longueurs d'ondes d'émission de ladite source de lumière laser (11).

11. Dispositif de télémétrie laser monostatique (10) selon l'une quelconque des revendications 1 à 10, **caractérisé en ce que** ledit duplexeur (13) comprend un coupleur obtenu par fusion étirage de ladite fibre optique double gaine (14) avec ladite deuxième fibre optique (13₂).

12. Dispositif de télémétrie laser monostatique (10) selon l'une quelconque des revendications 1 à 11, **caractérisé en ce que** ladite source de lumière laser (11) est agencée de sorte à émettre des trains d'un nombre N d'impulsions par salve et **en ce qu'**il comprend des moyens de contrôle de ladite source de lumière laser (11) configurés de sorte à réduire automatiquement le nombre N d'impulsions dans le cas où le rapport signal à bruit calculé par lesdits moyens de traitement (34) est supérieur à un premier seuil prédéterminé permettant d'augmenter la fréquence de mesure, et de sorte à augmenter automatiquement le nombre N d'impulsions dans la limite des spécifications requises pour garantir des conditions de sécurité oculaire, dans le cas où ledit rapport signal à bruit est inférieur ou égal à un deuxième seuil prédéterminé.

## Patentansprüche

1. Monostatische Lasertelemetrievorrichtung (10), umfassend:
- eine Laserlichtquelle (11);
- einen Photodetektor (12);
- eine doppelt ummantelte Lichtleitfaser (14),
die mit einer optischen Vorrichtung (15) zum Kollimieren eines austretenden Strahls und zum Fokussieren eines Strahls gekoppelt ist, der in die Lasertelemetrievorrichtung (10) eintritt, wobei die doppelt ummantelte Lichtleitfaser (14) aus einem Kern mit mittlerem Brechungsindex n₁, einem inneren Mantel mit Brechungsindex n₂, einem äußeren Mantel mit Brechungsindex n₃ ausgebildet ist, wobei n₁<n₂<n₃;
- einen Lichtleitfaserduplexer (13), der geeignet ist, um das Licht, das durch die Laserlichtquelle (11) emittiert wird, das dazu bestimmt ist, an den Kern der doppelt ummantelten Lichtleitfaser (14) übertragen zu werden, von dem Licht zu trennen, das sich in dem inneren Mantel der doppelt ummantelten Lichtleitfaser (14) ausbreitet, das dazu bestimmt ist, an den Photodetektor (12) übertragen zu werden, umfassend:
- eine erste Lichtleitfaser (13₁), die einen Eingangsanschluss des Duplexers (13) ausbildet,
- eine zweite Lichtleitfaser (13₂), die einen ersten Ausgangsanschluss des Duplexers (13) ausbildet, wobei die zweite Lichtleitfaser (13₂) multimodal ist,
wobei die erste Lichtleitfaser (13₁) mit der Laserquelle (11) gekoppelt ist und die zweite Lichtleitfaser (13₂) mit dem Photodetektor (12) gekoppelt ist und die doppelt ummantelte Lichtleitfaser (14) einen zweiten Ausgangsanschluss des Duplexers (13) ausbildet;
- Mittel (34) zum Verarbeiten des Stroms, der durch den Photodetektor (12) aus dem Licht erzeugt wird, das durch den Photodetektor (12) empfangen wird, die konfiguriert sind, um eine Entfernung aus dem erzeugten Strom bereitzustellen;
**dadurch gekennzeichnet, dass** die numerische Apertur des Lichtleiters, der aus dem inneren Mantel und dem äußeren Mantel der doppelt ummantelten Faser (14) ausgebildet ist, kleiner als oder gleich 0,5 ist, vorzugsweise kleiner als oder gleich 0,3 ist und größer als 0,1 ist, und dadurch, dass das Ende (14₁) der doppelt ummantelten Faser (14), das der optischen Vorrichtung (15) zum Kollimieren und zum Fokussieren zugewandt ist, eine Fläche aufweist, die in Bezug auf eine Achse senkrecht zu der Achse der Faser um einen Winkel geneigt ist, der größer als oder gleich der Hälfte des Arkussinus der numerischen Apertur ist.

2. Monostatische Lasertelemetrievorrichtung (10) nach Anspruch 1,
**dadurch gekennzeichnet, dass** der Winkel größer als oder gleich 8° ist.

3. Monostatische Lasertelemetrievorrichtung (10) nach Anspruch 1,
**dadurch gekennzeichnet, dass** die numerische Apertur kleiner als 0,22 ist und dadurch, dass der Winkel größer als oder gleich 6,5° ist.

4. Monostatische Lasertelemetrievorrichtung (10) nach einem der Ansprüche 1 bis 3, **dadurch gekennzeichnet, dass** das Ende der doppelt ummantelten Lichtleitfaser (14) gespalten oder poliert ist oder aus einem Verbinder ausgebildet ist, der auf der doppelt ummantelten Lichtleitfaser (14) montiert ist.

5. Monostatische Lasertelemetrievorrichtung (10) nach einem der Ansprüche 1 bis 4, **dadurch gekennzeichnet, dass** der Photodetektor (12) eine Fotodiode (31) umfasst und als zusätzliche Option die Transimpedanzverstärkerschaltung mit Operationsverstärker (33), die dazu bestimmt ist, den Strom zu verstärken, der durch die Fotodiode (31) erzeugt wird, Mittel (32) zum Begrenzen des erzeugten Stroms umfasst.

6. Monostatische Lasertelemetrievorrichtung (10) nach einem der Ansprüche 1 bis 5, **dadurch gekennzeichnet, dass** die Verarbeitungsmittel (34) Mittel zum Subtrahieren eines zuvor definierten Stromwerts von dem Strom umfassen, der durch die Fotodiode erzeugt wird, wobei der zuvor definierte Stromwert zu der Gruppe gehört, umfassend mindestens:
- einen konstanten Stromwert;
- einen Stromwert proportional zu dem Strom, der durch parasitäre Reflexionen erzeugt wird.

7. Monostatische Lasertelemetrievorrichtung (10) nach einem der Ansprüche 1 bis 6, **dadurch gekennzeichnet, dass** die optische Vorrichtung (15) zum Kollimieren eine dünne Linse, eine asphärische Linse oder ein diffraktives optisches Element wie eine Fresnel-Linse umfasst.

8. Monostatische Lasertelemetrievorrichtung (10) nach einem der Ansprüche 1 bis 7, **dadurch gekennzeichnet, dass** die Laserlichtquelle (11) mindestens eine Laserdiode umfasst, die geeignet ist, um Lichtimpulse in dem Wellenlängenband von 1530 bis 1600 nm zu emittieren.

9. Monostatische Lasertelemetrievorrichtung (10) nach einem der Ansprüche 1 bis 8, **dadurch gekennzeichnet, dass** der Photodetektor (12) eine Faserfotodiode mit einer multimodalen Faser umfasst, die in dem photoleitenden Modus oder in einem Lawinenmodus arbeitet.

10. Monostatische Lasertelemetrievorrichtung (10) nach einem der Ansprüche 1 bis 9, **dadurch gekennzeichnet, dass** das Ende (14₁) der doppelt ummantelten Lichtleitfaser (14) für die Emissionswellenlänge(n) der Laserlichtquelle (11) antireflexbehandelt ist.

11. Monostatische Lasertelemetrievorrichtung (10) nach einem der Ansprüche 1 bis 10, **dadurch gekennzeichnet, dass** der Duplexer (13) einen Koppler umfasst, der durch Schmelzziehen der doppelt ummantelten Lichtleitfaser (14) mit der zweiten Lichtleitfaser (13₂) erhalten wird.

12. Monostatische Lasertelemetrievorrichtung (10) nach einem der Ansprüche 1 bis 11, **dadurch gekennzeichnet, dass** die Laserlichtquelle (11) angeordnet ist, um Folgen einer Anzahl N von Impulsen pro Impulsbündel zu emittieren, und dadurch, dass sie Mittel zum Steuern der Laserlichtquelle (11) umfasst, die konfiguriert sind, um die Anzahl N von Impulsen automatisch zu reduzieren, falls das Signal-Rausch-Verhältnis, das durch die Verarbeitungsmittel (34) berechnet wird, größer als ein erster zuvor bestimmter Schwellenwert ist, der eine Erhöhung der Messfrequenz ermöglicht, und um die Anzahl N von Impulsen innerhalb der Grenzen der erforderlichen Spezifikationen zum Sicherstellen von Augensicherheitsbedingungen automatisch zu erhöhen, falls das Signal-Rausch-Verhältnis kleiner als oder gleich einem zweiten zuvor bestimmten Schwellenwert ist.

## Claims

1. Monostatic laser telemetry device (10) comprising:
- a laser light source (11);
- a photodetector (12);
- a double-clad optical fiber (14) coupled to an optical device (15) for collimating an outgoing beam and for focusing a beam entering said laser telemetry device (10), said double-clad optical fiber (14) being formed of a core of average refractive index n₁, of an inner cladding of refractive index n₂, and of an outer cladding of refractive index n₃, with n₁<n₂<n₃;
- an optical fiber duplexer (13) capable of separating the light emitted by said laser light source (11), which light is to be transmitted to the core of said double-clad optical fiber (14), from the light propagating in the inner cladding of said double-clad optical fiber (14), which light is to be transmitted to said photodetector (12), comprising:
- a first optical fiber (13₁) forming an input port of said duplexer (13),
- a second optical fiber (13₂) forming a first output port of said duplexer (13), said second optical fiber (13₂) being a multimode optical fiber,
said first optical fiber (13₁) which is coupled to said laser source (11) and said second optical fiber (13₂) being coupled to said photodetector (12), and said double-clad optical fiber (14) forming a second output port of said duplexer (13);
- means (34) for processing the current generated by said photodetector (12) on the basis of the light received by said photodetector (12), which means are configured so as to provide a distance on the basis of said generated current;
**characterized in that** the numerical aperture of the light guide formed by the inner cladding and the outer cladding of the double-clad fiber (14) is less than or equal to 0.5, preferably less than or equal to 0.3, and greater than 0.1 and **in that** the end (14₁) of said double-clad fiber (14) facing said collimating and focusing optical device (15) has a face inclined with respect to an axis perpendicular to the axis of the fiber by an angle greater than or equal to half the arcsine of said numerical aperture.

2. Monostatic laser telemetry device (10) according to claim 1,
**characterized in that** said angle is greater than or equal to 8°.

3. Monostatic laser telemetry device (10) according to claim 1,
**characterized in that** said numerical aperture is less than 0.22 and **in that** said angle is greater than or equal to 6.5°.

4. Monostatic laser telemetry device (10) according to any one of claims 1 to 3, **characterized in that** said end of said double-clad optical fiber (14) is cleaved or polished or is formed by a connector mounted on said double-clad optical fiber (14).

5. Monostatic laser telemetry device (10) according to any one of claims 1 to 4, **characterized in that** said photodetector (12) comprises a photodiode (31) and, as an additional option, the transimpedance amplifier circuit (33) with operational amplifier, which circuit is to amplify the current generated by said photodiode (31), comprises means (32) for limiting the generated current.

6. Monostatic laser telemetry device (10) according to any one of claims 1 to 5, **characterized in that** said processing means (34) comprise means for subtracting a predefined current value from the current generated by said photodiode, said value belonging to the group comprising at least:
- constant current value;
- current value proportional to the current generated by parasitic reflections.

7. Monostatic laser telemetry device (10) according to any one of claims 1 to 6, **characterized in that** said collimating optical device (15) comprises a thin lens, an aspheric lens or a diffractive optical element such as a Fresnel lens.

8. Monostatic laser telemetry device (10) according to any one of claims 1 to 7, **characterized in that** said laser light source (11) comprises at least one laser diode capable of emitting pulses of light in the 1530 to 1600 nm wavelength band.

9. Monostatic laser telemetry device (10) according to any one of claims 1 to 8, **characterized in that** said photodetector (12) comprises a pigtailed photodiode with a multimode fiber, operating in a photoconductive mode or in avalanche mode.

10. Monostatic laser telemetry device (10) according to any one of claims 1 to 9, **characterized in that** said end (14₁) of said double-clad optical fiber (14) is anti-reflection treated for the emission wavelength or wavelengths of said laser light source (11).

11. Monostatic laser telemetry device (10) according to any one of claims 1 to 10, **characterized in that** said duplexer (13) comprises a coupler obtained by fusion drawing said double-clad optical fiber (14) with said second optical fiber (13₂).

12. Monostatic laser telemetry device (10) according to any one of claims 1 to 11, **characterized in that** said laser light source (11) is arranged so as to emit trains of a number N of pulses per burst and **in that** it comprises means for controlling said laser light source (11) which are configured so as to automatically reduce the number N of pulses in the event that the signal-to-noise ratio calculated by said processing means (34) is greater than a first predetermined threshold allowing the measurement frequency to be increased, and so as to automatically increase the number N of pulses, within the limit of the specifications required to guarantee eye safety conditions, in the event that said signal-to-noise ratio is less than or equal to a second predetermined threshold.
